# EUROPEAN PATENT APPLICATION

(11) **EP 3 319 043 A1**
(43) Date of publication of application: **09.05.2018**
(21) Application number: 16197672.5
(22) Date of filing: 08.11.2016
(51) Int. Cl.: G06T 7/33

(54) **METHOD FOR REGISTRATION OF A PLURALITY OF SCANS**

(71) Applicant: Siemens Aktiengesellschaft, 80333 München (DE)
(72) Inventor: Johnson, Rebecca, 81825 München (DE); MacWilliams, Asa, 82256 Fürstenfeldbruck (DE)

(57) **Abstract**

The present invention relates to a method for registration of a plurality of scans (20), comprising the steps of determining at least one pose (10) in at least one scan (20) of the plurality of scans (S1), aligning the at least one scan (20) of the plurality of scans in accordance with the at least one pose (10, S2) and removing the at least one pose (10) in the at least one scan (20) of the plurality of scans (S3). The invention is further related to a corresponding computer program.

## Description

### 1. Technical field

The present invention relates to a method for registration of a plurality of scans and to a corresponding computer program. The invention is particularly used in the field of digital technologies, including digital factory.

### 2. The prior art

The approach large-scale laser scanning or photogrammetric scanning of real-world objects is known from prior art. Usually this approach can be split in different processing steps, as explained in the following in more detail.

First, data is collected about e.g. the shape and dimension of a real-world object, such as a building or a factory. More precisely, a point cloud of geometric samples on the surface of the subject is created. In other words, the real-world object is scanned in e.g. three dimensions by a 3D laser scanner, such as Faro Focus 3D laser scanner, resulting in a point cloud. The point cloud can be defined as a set of data points in a coordinate system. Accordingly, a large amount of scans is generated at this stage.

Then, the point cloud is used to extrapolate the shape of the object (referred to as "reconstruction"). The reconstruction of the real-world object is a technology of a wide variety of fields, such as Computer Aided Drafting (CAD) or Computer Aided Design and Drafting (CADD). Further, the single scans have to be stitched or merged together (referred to as "registration "). Accordingly, a single surface is generated during registration, which incorporates the information of all the single scans.

There are several merging algorithms available for this purpose. The merging algorithms require e.g. a wide area of overlap or very noticeable features of the scans for a processor to perform the merging algorithm automatically or calibration markers, such as spheres or check board printouts. The calibration markers are placed in view of the scanner for highlighting different axes.

However, known merging algorithms have several disadvantages. In case of calibration markers, the calibration markers are disadvantageously present in the scans and the process of placing the markers is time-consuming and error prone due to placement challenges. In particular, a number of markers are required, which have to be distributed across different axes and which can be accidentally or incorrectly moved.

It is therefore an objective of the invention to provide a method for registration of an object in an efficient and reliable manner.

### 3. Summary of the invention

This problem is according to one aspect of the invention solved by a method for registration of a plurality of scans, comprising the steps of:
a. Determining at least one pose in at least one scan of the plurality of scans,
b. Aligning the at least one scan of the plurality of scans in accordance with the at least one pose,
c. Removing the at least one pose in the at least one scan of the plurality of scans.

Accordingly, the method is directed to the registration of a plurality of scans. As previously outlined, after the generation of a large amount of scans during large-scale laser scanning, the scans have to be merged.

First, one or more poses are determined in one or more scans of the plurality of scans. Thereby, the pose can be defined as state, motion or position of an object or human being. Therefore, in particular a person using the laser scanner for scanning a real-world object already represents the Y-axis and the X-axis by standing upright on the ground and can be used. The pose can advantageously offer more information on the Y-axis and Z-axis.

Further, the one or more poses can be identified in one or more scans of the plurality of scans. In other words, the plurality of scans can be registered by determining the poses and aligning the scans in accordance with the poses. Afterwards, the identified or determined poses are removed from the plurality of scans. Thus, the registration advantageously results in a marker-free registered scan. The scans do not comprise any calibration marker after registration compared to prior art.

Thus, the method according to the invention advantageously makes use of one or more human beings already present in the real-world objects to be scanned. In particular, the users scanning the real-world objects can be chosen instead of the calibration markers.

Moreover, the disadvantages of the prior art are overcome since no time is spent for placing the calibration markers or scanning more often to create enough overlap for an automatic detection.

Thus, the present method is more efficient, less time-consuming and more reliable compared to known registration approaches, such as calibration markers.

In one aspect of the invention the at least one pose is a specified skeletal pose. Accordingly, the pose can be a position, state or motion of a human body to be tracked. In case of a tracked skeleton of the human body, for example an array of joints can be generated providing the position of the recognized human joints in space over time. Thus, the array contains the position of each joint. In other words, the skeleton of a user or human being can be tracked.

The invention is also directed to a computer program comprising instructions for implementing a method in accordance with any of the preceding claims.

### 4. Short description of the drawings

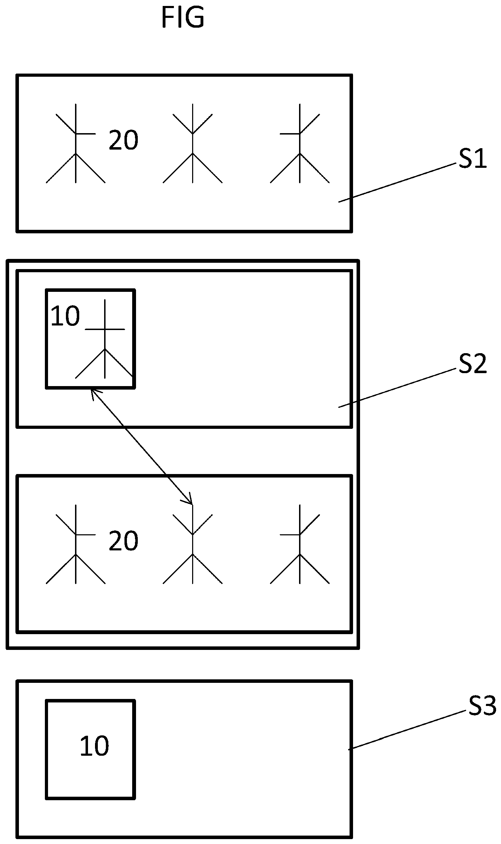

In the following detailed description, presently preferred embodiments of the invention are further described with reference to the only figure FIG which shows a flow chart for registration of a plurality of scans according to the invention.

### 5. Detailed description of preferred embodiments

As illustrated in FIG, the method is directed to skeletal tracking and is used for calibration. For example, a person or user uses a scanner for scanning real-world objects, such as buildings or factories. Thus, a plurality of scans 20 is generated during large-scale laser scanning.

Thereby, the person or user already represents the Y-axis and the X-axis by standing upright on the ground. The skeletal pose 10 of the user can offer more information on the Y-axis and Z-axis. Accordingly, a skeletal pose can e.g. correspond to a starting position with the arms of the user stretched out etc.

In a first step, this specified one or more skeletal poses 10 are determined or searched S1. In other words, the plurality of scans 20 is searched for the one or more poses 10 during registration. If one or more poses 10 are determined in one or more scans 20, these scans 10 are aligned with the according poses 20 during registration. After registration, the one or more users or skeletal poses of the users are removed from the scans, resulting in a marker-free scan. Thus, in other words, skeletal tracking is used as calibration marker.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network. The relationship of client and server arises by virtue of computer programs running on the respective computers and having a client-server relationship to each other.

## Claims

1. Method for registration of a plurality of scans (20), comprising the steps of:
a. Determining at least one pose (10) in at least one scan (20) of the plurality of scans (S1),
b. Aligning the at least one scan (20) of the plurality of scans in accordance with the at least one pose (10, S2),
c. Removing the at least one pose (10) in the at least one scan (20) of the plurality of scans (S3).

2. Method according to claim 1, wherein the at least one pose (10) is a specified skeletal pose.

3. A computer program comprising instructions for implementing a method in accordance with any of the preceding claims.
